# EUROPEAN PATENT SPECIFICATION

(11) **EP 1 780 060 B1**
(45) Date of publication and mention of the grant of the patent: **24.12.2008**
(21) Application number: 06255317.7
(22) Date of filing: 16.10.2006
(51) Int. Cl.: B60H 1/00, F16L 9/00

(54) **Inlet duct for a HVAC system**
Einlasskanal für eine Heizungs-, Lüftungs- und Klimaanlage
Conduit d'admission pour un système de chauffage, ventilation et air conditionné

(30) Priority: 26.10.2005 GB 0521794
(43) Date of publication of application: 02.05.2007
(73) Proprietor: Delphi Technologies, Inc., Troy, Michigan 48007 (US)
(72) Inventor: Skinner, Neil R., 8052 Bertrange (LU); Sirtoli, Daniel M., 6790 Aubange (BE)
(74) Representative: Robert, Vincent

(56) References cited:
- EP-A- 0 556 091
- EP-A- 1 369 270
- DE-C1- 10 012 972
- FR-A- 2 854 844
- FR-A- 2 879 797

## Description

The present invention relates to an inlet duct for a heating, ventilating and air conditioning (HVAC) system of a vehicle. The purpose of a air inlet is to guide air from either of two sources, air from outside the vehicle (OSA) or air to be reused / recirculated from the passenger compartment (RECIRC). It is this recirculated air path this invention has concern. Prior to this invention the design of vehicle HVAC air inlet recirculation openings have been either in the whole a fully open aperture or partially covered by a grid or mesh. The grid feature has not been placed to guide or manage air flow, only to prevent foreign objects from reaching the blower wheel or drive motor.

The switching of the air flow from OSA to RECIRC is achieved using a valve of various shapes and size to block the air flow from either of the two air inlet openings. The valve in part helps direct and guide the air into the blower wheel orifice.

Document EP 1 369 270, which is considered as the closest prior art document, discloses an air inlet duct provided with such a flap valve.

Due to the design of these valves and opening positions relative to the blower orifice, air is often not distributed evenly over the orifice opening area, this in turn causes uneven air loading and as a consequence higher levels of noise are generated. It is this noise that the present invention attempts to reduce and/or redirect. This is achieved by distributing the air flow evenly over the orifice and by preventing reflected noise reaching the vehicle occupants or test microphone.

In known HVAC systems, the mass of the vehicle dash panel or soft furnishing has been used in an effort to absorb these noises. This done by facing the RECIRC opening toward the dash panel. How ever this is not always possible and the dash panel is not present in out of vehicle testing.

The recirculation opening is often placed in a position or direction so as not to face the test microphone, and hence give a reduced noise value, but in doing so may eliminate good air flow or even cause blower wheel loading due to the shape of the valve.

According to the present invention there is provided an air inlet duct for a heating, ventilating and air conditioning system, the inlet duct comprising a housing having an air outlet, an outside air inlet, a recirculation air inlet, and a flap valve, characterised in that the flap valve is selectively operable from a first position wherein the flap valve obscures the outside air inlet to a second position wherein the flap valve obscures the recirculation air inlet or to any position therebetween, thereby to place the air outlet in fluid communication with the recirculation air inlet, the outside air inlet or both respectively, and in that the recirculation air inlet is provided with air flow guide means for directing the flow of air through the recirculation air inlet towards the air outlet and distributing the air flow evenly across the air outlet.

Preferably the guide means comprises a plurality of vanes or louvres for guiding the flow of air passing thereover. Preferably the plurality of vanes or louvres are arranged at regular spacing from one another. Preferably the vanes or louvres are arranged substantially parallel to one another.

The housing may comprise a first region defining said outlet, a second region, adjacent said first region, said second region defining said outside air inlet, and a third region extending between said first and second regions having formed therein or mounted thereon a plurality of vanes or louvres defining said recirculation air inlet.

In a preferred embodiment, vanes or louvres are placed in the opening of the recirculation air inlet in front of an HVAC blower wheel. These vanes, using computer simulation and part testing may be designed to give optimum air distribution over the blower wheel orifice and direct any generated noise or tone away from the recording test microphone. In doing so the optimum opening size, shape and position can be used to minimise effecting the overall noise value measured or that level felt by the vehicle occupant.

An embodiment of the invention will now be described by way of example only with reference to the accompanying drawings in which:
Figure 1 is a sectional side view of an inlet duct according to an embodiment of the present invention;

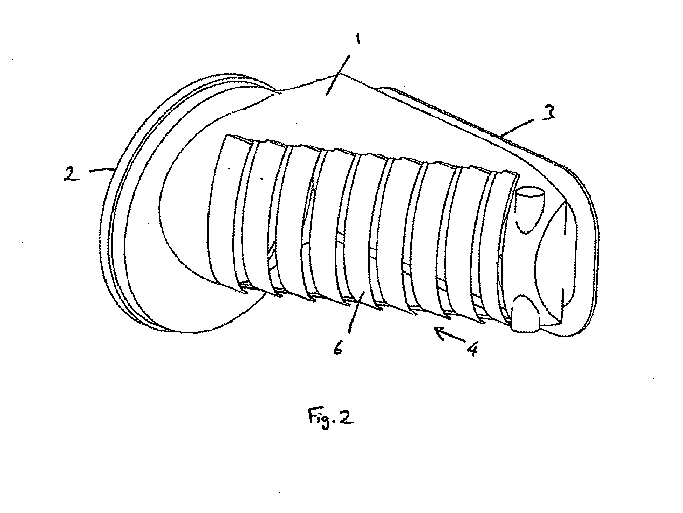

Figure 2 is a perspective view of the duct of Figure 1 viewed from the recirculation air inlet side;
Figures 3 and 4 are further a perspective views of the duct of Figure 1.

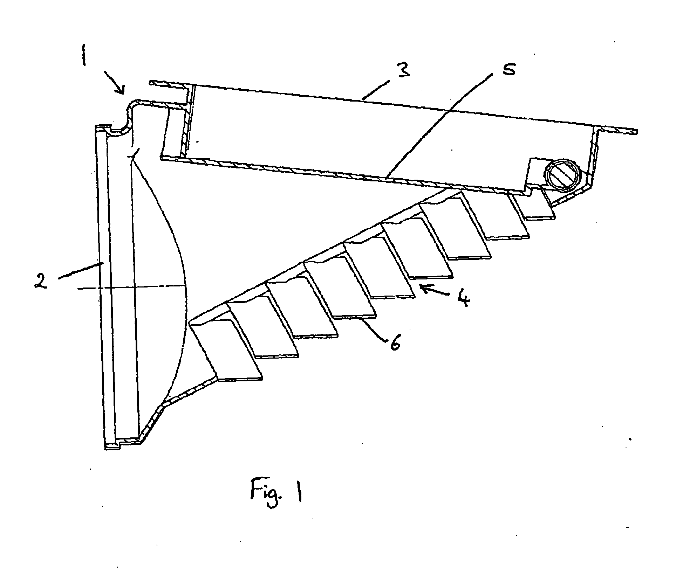

As shown in the drawings, an inlet duct for a HVAC system according to the present invention comprises a housing 1 having an air outlet 2 adapted to be connected to inlet of a blower fan of the HVAC system of a vehicle, an outside air inlet 3 adapted to be connected to a duct feeding air from outside of the vehicle to the HVAC system, a recirculation air inlet 4 adapted to draw air from inside the vehicle passenger compartment. Within the housing is pivotally mounted a flap valve 5, moveable between a position (shown in Figure 1) wherein the flap valve 5 obscures the outside air inlet 3, such that air is supplied to the HVAC system via the duct air outlet 2 only through the recirculation air inlet, and a position wherein the flap valve 5 obscures the recirculation air inlet 4 such that air is supplied to the HVAC system via the duct air outlet 2 only through the outside air inlet. Obviously the flap valve 5 may be selectively moveable between its abovementioned extreme positions, or to any desired position therebetween, in order to control the source of air supplied to HVAC system (i.e. outside air, recirculated air or possibly a mixture of both).

In order to control and guide the flow of air through the air recirculation inlet 4 and to avoid unwanted noise transmission therethrough into the passenger compartment, a plurality of parallel, closely spaced vanes or louvres 6 are provided in the recirculation air inlet 4.

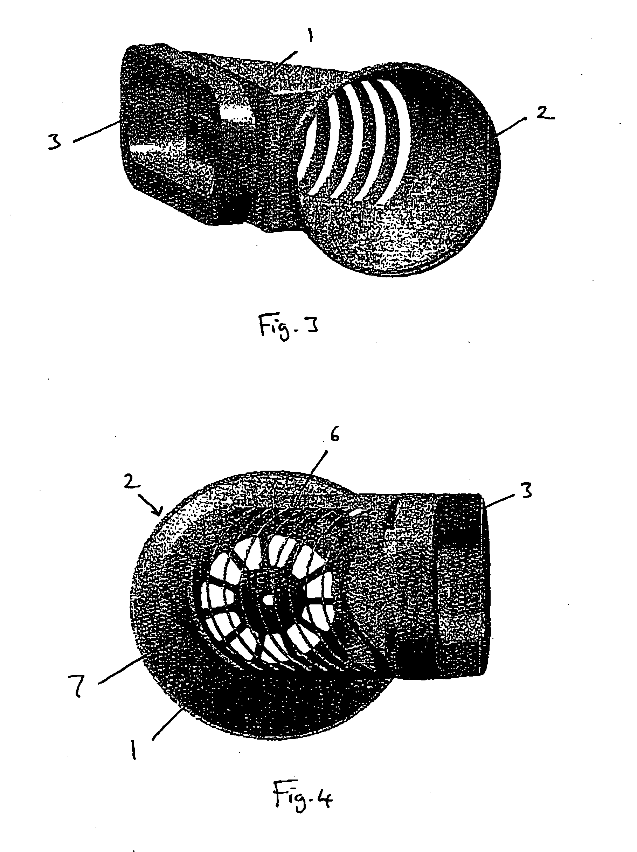

The vanes 6 are arranged to direct air flow through the recirculation air opening 4 towards the air outlet 2 and thus towards the blower fan (7 Fig 4) of the HVAC system. The parallel arrangement of the vanes 6 distributes the air flow evenly across the outlet opening, providing even air loading of the blower and thus reducing noise generation. The position of the vanes 6 also directs an reflected noise away from the vehicle occupants and/or any test microphone.

By good management of air flow and reflected noise a lower decibel value may be achieved for the vehicle occupant or test microphone irrespective of opening position relative to the test point.

The vanes 6 may be designed to suit the opening location, shape, size and position relative to the specified test microphone location. The vanes 6 are placed in the opening for the recirculation air inlet 4, upstream of the valve 5 so as not to affect the air flow through the outside air inlet 3. The number, length of each vane, the relative spacing and the vane angle can be defined using test and simulation. The shape of the vanes can be defined by the opening size shape and available package. The vane need not be of pure radius but optimised to any shape necessary to fit the vehicle package shape.

The vanes 6 may be moulded direct into the air inlet plastic housing 1 or mounted on an additional part added to the housing 1. The vanes 6 are preferably of minimal thickness to reduce lost air flow, either having radiused or flat edges defined by testing and tooling requirements.

The vanes 6 may be place in any orientation relative to the vehicle or HVAC module to give optimum performance.

The vanes 6 may also advantageously be used as debris screen for foreign object.

The outside air inlet 3 may be provided with a peripheral groove in which may be inserted a foam seal to provide an airtight seal against an adjacent outside air duct.

## Claims

1. An air inlet duct for a heating, ventilating and air conditioning system, the inlet duct comprising a housing (1) having an air outlet (2), an outside air inlet (3), a recirculation air inlet (4), and a flap valve (5), wherein the flap valve (5) is selectively operable from a first position wherein the flap valve (5) obscures the outside air inlet (3) to a second position wherein the flap valve (5) obscures the recirculation air inlet (4) or to any position therebetween, thereby to place the air outlet (2) in fluid communication with the recirculation air inlet (4), the outside air inlet (2) or both respectively, **characterized in that** the recirculation air inlet (4) is provided with air flow guide means (6) for directing the flow of air through the recirculation air inlet (4) towards the air outlet (2) and distributing the air flow evenly across the air outlet (2).

2. An air inlet duct as claimed in claim 1, wherein the air flow guide means (6) comprises a plurality of vanes or louvres (6) for guiding the flow of air passing thereover.

3. An air inlet duct as claimed in claim 2, wherein the plurality of vanes or louvres (6) are arranged at regular spacing from one another.

4. An air inlet duct as claimed in claims 2 or 3, wherein the vanes or louvres (6) are arranged substantially parallel to one another.

5. An air inlet duct as claimed in any preceding claim, wherein the housing (1) comprises a first region defining said outlet (2), a second region, adjacent said first region, said second region defining said outside air inlet (3), and a third region extending between said first and second regions having formed therein or mounted thereon a plurality of vanes or louvres (6) defining said recirculation air inlet (4).

6. An air inlet duct as claimed in claim 5, wherein the vanes or louvres (6) are placed in the opening of the recirculation air inlet (4) in front of an HVAC blower wheel.

## Patentansprüche

1. Lufteinlassrohr für Heizungs-, Belüftungs- und Klimaanlage, wobei das Einlassrohr ein Gehäuse (1) mit einem Luftauslass (2), einem Außenlufteinlass (3), einem Umlufteinlass (4) und einem Klappenventil (5) umfasst, welches wahlweise aus einer ersten Stellung, wo das Klappenventil (5) den Außenlufteinlass (3) verdeckt, in eine zweite Stellung, wo das Klappenventil (5) den Umlufteinlass (4) verdeckt, oder einer beliebigen dazwischen liegenden Stellung gebracht werden kann, um somit den Luftauslass (2) in fließende Kommunikation mit Umlufteinlass (4), Außenlufteinlass (2) oder beiden zu bringen; **dadurch** charakterisiert, dass der Umlufteinlass (4) eine Luftleitvorrichtung (6) zum Leiten des Luftstroms durch den Umlufteinlass (4) zum Luftauslass (2) und zur gleichmäßigen Verteilung des Luftstroms über den Luftauslass (2) versehen ist.

2. Lufteinlassrohr nach Anspruch 1, wobei die Luftleitvorrichtung (6) mehrere Flügel oder Lamellen (6) zum Leiten des durchfließenden Luftstroms aufweist.

3. Lufteinlassrohr nach Anspruch 2, wobei die mehreren Flügel oder Lamellen (6) in einem gleichmäßigen Abstand voneinander angeordnet sind.

4. Lufteinlassrohr nach Anspruch 2 oder 3, wobei Flügel oder Lamellen (6) im Wesentlichen parallel zueinander angeordnet sind.

5. Lufteinlassrohr nach einem beliebigen der vorstehenden Ansprüche, wobei das Gehäuse (1) einen ersten, den besagten Auslass (2) bildenden Bereich, einen dem ersten Bereich benachbarten, den besagten Außenlufteinlass (3) bildenden zweiten Bereich, und einen sich zwischen dem ersten und dem zweiten Bereich erstreckenden dritten Bereich umfasst, welcher mehrere Flügel oder Lamellen (6) zum Bilden des besagten Umlufteinlasses (4) aufweist.

6. Lufteinlassrohr nach Anspruch 5, wobei die Flügel oder Lamellen (6) in der Öffnung des Umlufteinlasses (4) vor einem HVAC-Gebläserad angebracht sind.

## Revendications

1. Conduit d'entrée d'air pour un système de chauffage, ventilation et conditionnement d'air, le conduit d'entrée comprenant un boîtier (1) ayant une sortie d'air (2), une entrée d'air extérieur (3), une entrée d'air de recirculation (4) et une vanne à clapet (5), dans lequel la vanne à clapet (5) est susceptible d'être sélectivement actionnée depuis une première position dans laquelle la vanne à clapet (5) obture l'entrée d'air extérieur (3) vers une seconde position dans laquelle la vanne à clapet (5) obture l'entrée d'air de recirculation (4), ou vers une position quelconque entre celles-ci, pour placer ainsi la sortie d'air (2) en communication fluidique avec l'entrée d'air de recirculation (4), avec l'entrée d'air extérieur (2), ou avec les deux respectivement, **caractérisé en ce que** l'entrée d'air de recirculation (4) est équipée d'un moyen de guidage de flux d'air (6) pour diriger le flux d'air à travers l'entrée d'air de recirculation (4) vers la sortie d'air (2) et pour distribuer le flux d'air de façon égale à travers la sortie d'air (2).

2. Conduit d'entrée d'air selon la revendication 1, dans lequel le moyen de guidage de flux d'air (6) comprend une pluralité d'aubes ou de volets (6) pour guider le flux d'air qui passe sur celles-ci/ceux-ci.

3. Conduit d'entrée d'air selon la revendication 2, dans lequel la pluralité d'aubes ou de volets (6) sont agencé(e)s à un écartement régulier les unes/uns des autres.

4. Conduit d'entrée d'air selon les revendications 2 ou 3, dans lequel les aubes ou les volets (6) sont agencé(e)s sensiblement parallèlement les unes/uns aux autres.

5. Conduit d'entrée d'air selon l'une quelconque des revendications précédentes, dans lequel le boîtier (1) comprend une première région définissant ladite sortie (2), une seconde région adjacente à ladite première région, ladite seconde région définissant ladite entrée d'air extérieur (3), et une troisième région s'étendant entre ladite première et ladite seconde région, dans laquelle sont formé(e)s ou monté(e)s une pluralité d'aubes ou de volets (6) définissant ladite entrée d'air de recirculation (4).

6. Conduit d'entrée d'air selon la revendication 5, dans lequel les aubes ou les volets (6) sont placé(e)s dans l'ouverture de l'entrée d'air de recirculation (4) en face d'un rotor de ventilateur de chauffage/ventilation/conditionnement d'air.
